# EUROPEAN PATENT SPECIFICATION

(11) **EP 1 210 475 B1**
(45) Date of publication and mention of the grant of the patent: **25.05.2005**
(21) Application number: 00948675.4
(22) Date of filing: 13.07.2000
(51) Int. Cl.: D06L 1/08, D06F 43/08

(54) **DRY CLEANING APPARATUS AND METHOD CAPABLE OF UTILIZING A SILOXANE COMPOSITION AS A SOLVENT**
TROCKENREINIGUNGSVORRICHTUNG SOWIE GEEIGNETES VERFAHREN ZUR VERWENDUNG EINER SILOXANZUSAMMENSETZUNG ALS LÖSUNGSMITTEL
APPAREIL DE NETTOYAGE A SEC ET PROCEDE POUVANT UTILISER UNE COMPOSITION SILOXANE COMME SOLVANT

(30) Priority: 14.07.1999 US 354387
(43) Date of publication of application: 05.06.2002
(73) Proprietor: Greenearth Cleaning, LLC, Leawood, KS 66209 (US)
(72) Inventor: BERNDT, Wolf-Dieter, R., Reno, NV 89511 (US); GRIFFISS, John, McLeod, San Francisco, CA 94123 (US); DOUGLAS, James, E., El Dorado Hills, CA 95762 (US)
(74) Representative: Müller, Wolfram Hubertus, Dr. Dipl.-Phys.
(86) International application number: PCT/US2000/019255
(87) International publication number: WO 2001/048297

(56) References cited:
- WO-A-00/04221
- DE-A- 3 739 711
- DE-A1- 3 739 711
- JP-A- 6 327 888
- US-A- 3 123 494
- US-A- 3 395 086
- US-A- 4 712 392
- US-A- 5 865 852

## Description

### FIELD OF THE INVENTION

This invention is in the general field of dry cleaning of clothing, textiles, fabrics and the like, and is more particularly directed to a method and apparatus for dry cleaning with a siloxane solvent.

### BACKGROUND OF THE INVENTION

Dry cleaning is a major industry throughout the world. In the United States alone, there are more than forty thousand dry cleaners (many of these have multiple locations). The dry cleaning industry is an essential industry in the present economy. Many articles of clothing (and other items) must be dry cleaned in order to remain clean by removal of body fats and oils, and presentable by preventing shrinking and discoloring.

The most widely used dry cleaning solvent until now has been perchloroethylene (PERC). There are numerous disadvantages to PERC including inherent toxicity and odor.

Another problem in this field is that different fabrics require different handling in the presently used systems in order to prevent damage to the fabrics during the dry cleaning process.

Prior art dry cleaning processes include the use of various solvents with appropriate machinery to accomplish the cleaning. As mentioned earlier, the solvent most widely used has been PERC. PERC has the advantage of being an excellent cleaning solvent, but the disadvantage of being a major health and environmental hazard, i.e., it has been linked to numerous forms of cancer and it is very destructive to ground water and aquatic life. In some areas PERC is prohibited due to these disadvantages. Additionally, in the past, other solvents such as petroleum-based solvents or hydrocarbons have been tried and used. These various solvents are less aggressive than PERC, but are stilt classified as volatile organic compounds (VOC's). As such, such compounds are regulated and permitted by most air districts.

The dry cleaning industry has long depended on petroleum-based solvents and the well-known chlorinated hydrocarbons, perchlorethylene and trichlorethylene, for use in the cleaning of fabrics and articles of clothing. Since the 1940's, PERC was praised as being a synthetic compound that is non-flammable and has great degreasing and cleaning qualities ideal for the dry cleaning industry. Beginning in the 1970's, PERC was found to cause liver cancer in animals. This was an alarming discovery, as dry cleaning waste was placed in landfills and dumpsters at that time, from which it leached into soil and ground water.

Environmental Protection Agency regulations gradually were tightened, culminating in a law that took effect in 1996 that required all dry cleaners to have "dry to dry" cycles, meaning that fabrics and articles of clothing go into the machine dry and come out dry. These required "closed loop" systems that can recapture almost all PERC, liquid or vapor. The process "cycle" involves placing fabrics or articles of clothing into a specially designed washing machine that can hold 6,8 to 68 kg (15 to 150 pounds) of fabrics or articles ofclothing that are visible through a circular window. Prior to being placed into the machine, the fabrics or articles of clothing are checked and treated by local hand spotting for stains. If the fabric is unusual or known to be troublesome, the label is checked to verify that the manufacturer has deemed the item safe for dry cleaning. If not, the stain may be permanent. As an example, a sugar stain may not be seen, but once it is run through the dry cleaning process, it oxidizes and turns brown. If the stain is grease related, water won't help, but solvent will as it solubilizes grease. In fact, the principle reason for dry cleaning certain clothes (which should not be washed in a regular washing machine) is to remove the build up of body oils (known as fatty acids) because they too oxidize and produce rancid nasty smells.

The grease and fatty acids which build up in the solvent is removed by filtration and by distillation of the solvent. In other words, the dirty solvent is boiled and all vapors are condensed through a condensation coil back to a liquid. The liquid recovered is comprised of both solvent and water and the liquid is then passed through a separator in order to separate the two non-miscible liquids. The water may originate from the natural humidity of the ambient air exposed to the textiles prior to cleaning. Another source of moisture may be materials used during pre-spotting.

Before textiles are removed from the machine, the washer becomes a dryer. Hot air is blown through the compartment but, instead of being vented outside, the airstream goes through a condenser that condenses the vapour to liquid. The liquid then passes through a separator to decant off the water from the solvent and return the solvent for reuse.

Document US-A-4 712 392 discloses a system for dry cleaning articles comprising a cleaning basket, a tank containing an organic solvent such PERC, a pump coupled between the tank and the cleaning basket, a fan, a condenser and a separator.

Document DE-A1-37 39 711 generally discloses the use of a siloxane solvent for dry cleaning. To seperate water from the siloxane solvent it is suggested to absorb the water by multivalent alcohols or polyglycols such as glycerin, or in salt solutions. The use of gravitational seperators is discouraged in view of a small difference in density between water and siloxane solvent.

Document US-A-3 395 086 describes removal of moisture from an organic liquid solvent by passing a destillate through a condenser and afterwards through a foam-like hydrophobic material located in front of or above a gravity type liquid separator. The foam-like hydrophobic material acts to coalesce the moisture and eases gravity separation of water and the organic solvent.

While verious systems such as those set forth hereinabove have been developed for dry cleaning with solvents such as PERC, petroleum-based solvents, and hydrocarbons, non have been specifically tailored for use with a siloxane composition.

### SUMMARY OF THE INVENTION

A system with the features of claim 1 and method with the feature of claim 19 are provided for dry cleaning articles utilizing a siloxane solvent. The system includes a cleaning basket for receiving the articles therein and one or more tanks for containing a siloxane solvent. Coupled between the tank and the cleaning basket is a pump for introducing siloxane solvent into the cleaning basket. Also included is either a still for destilling the solvent or a Kleen Rite cartridge. A fan is coupled to the cleaning basked for circulating air past a heater and into the cleaning basket for drying the articles. A condenser is coupled to the cleaning basket and produces a condensed mixture of water and siloxane solvent. A separator is coupled to the condenser for separating water in the condensed mixture from siloxane solvent in the condensed mixture via gravity.

In a preferred embodiment of the present invention, a temperature of the vapour latent from the cleaning basket is maintained between 48,9 °C and 58,9 °C (120 and 138 degrees Fahrenheit). Further, the circulating air may enter the basket between 48,9 °C and 82,2 °C (120 and 180 degrees Fahrenheit) during the drying process. As an option, a temperature of the siloxane solvent during agitation may be kept between 32,2 °C and 54,4 °C (90 and 130 degrees Fahrenheit) in order to enhance its cleaning capabilities.

Further preferred embodiments of the invention are identified in the subclaims.

### DESCRIPTION OF THE DRAWINGS

The aforementioned advantages of the present invention, as well as additional objects and advantages thereof, will be more fully understood hereinafter as a result of a detailed description of a preferred embodiment when taken in conjunction with the following drawing in which:
Figure 1 is a schematic that represents a dry cleaning machine that is used with solvent that has a boiling point that requires vacuum distillation;
Figure **2** is a flow diagram indicating the steps of the method of dry cleaning in accordance with one embodiment of the present invention;
Figure **3** is a flow diagram indicating the functional steps of the method of separating water from the solvent; and
Figure **4** is a schematic that represents the mechanism used in separating water from solvent wherein the density of both are very close, as set forth in Figure 3.

### DISCLOSURE OF THE INVENTION

The present invention includes an apparatus and method used in conjunction for the dry cleaning of fabrics, textiles, leathers and the like.

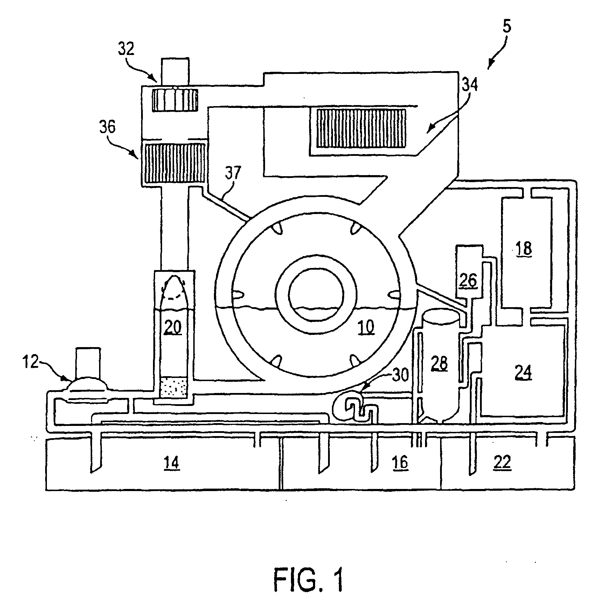

To perform the interrelated cleaning steps involving the present invention, a dry cleaning system **5** is shown schematically in Figure **1**, although it is recognized that alternative cleaning configurations can be used. It should be noted that the cleaning system **5** of Figure **1** may be used for processing with a Class 3-A type solvent.

The dry cleaning of articles or other items begins by placing them in a horizontal rotating cleaning basket **10** of the system **5.** The wash cycle is initiated with a dry cleaning fluid including an organo silicone-based siloxane solvent being pumped using a pump **12.** The solvent is pumped from either a working tank **14,** or a new solvent tank **16,** and then to the cleaning basket 10 with the articles. The course of the pumped solvent can either be through a filter **18**, or directly to the cleaning basket 10.

From the cleaning basket **10,** the solvent is then circulated through the button trap **20** to the pump **12.** After agitation for a predetermined amount of time, the solvent is drained and pumped to either of the three tanks **14, 16,** and **22** shown in Figure **1.** The cleaning basket **10** is then centrifuged in order to extract the remaining solvent to any of the tanks that is the desired.

The types of filtration systems compatible with the particular solvent of the present invention are: a spin disc of a 20 and 30 micron type with diatomaceous earth being capable of optional use with the 30 micron spin disc; a tubular filtration (flex, rigid, or bump) also being capable of optional use with diatomaceous earth; a cartridge (carbon core, all carbon or the standard size, jumbo or split size); and Kleen Rite® cartridge system which results in no need for a still. Filters may also be used with a dimension between 10 to 100 microns to filter condensed vapors prior to separation.

The solvent may be filtered so as to eliminate the particulate soil that is released from the articles being cleaned. Further, filtering of the silicone-based solvent eliminates the polymerization of the solvent even in the presence of catalysts.

The solvent being used for cleaning should be distilled at a rate of 0,834 to 1,669 l/kg (10 to 20 gallons per hundred pounds) cleaned, unless the aforementioned Kleen Rite® cartridge system is being used. To accomplish this, a still **24** may be used to receive solvent from the filter **18,** or from the dirty tank 22. The solvent in the dirty tank 22 can be introduced to the still through suction since the still is under a vacuum that is controlled by a float ball valve (not shown).

Any recovered or condensed vapors originating from the still may be condensed by water-cooled coils of a still vapor condenser **26.** Thereafter, gravity urges the condensed solvent into a separator **28.** The rate of flow, depending on the still, may range between 2,838 and 4,730 l/min (75 and 1.25 GPM), and the separator is engineered accordingly. Vacuum may be created by a liquid-head pump **30** or an evacuation process created by a venturi.

During the drying process, the articles are tumbled in the cleaning basket **10** with air being forced by a fan **32** over heating coils **34,** which results in the incoming air flow to be between 48,9 °C and 82,2 °C (120 and 180 degrees Fahrenheit). As the solvent and water remaining on the articles are heated and become vapor, the air flow exits the cleaning basket **10** and passes over cooling coils of a drying vapor condenser **36** where the vapors condense back to a liquid. Gravity feeds such liquid to the separator **28** via a conduit **37.**

The vapor laden air that leaves the cleaning basket **10** ranges in temperature between 48,9 °C and 58,9 °C (120 and 138) degrees Fahrenheit. This temperature is important in that it is 16,67 °C (30 degrees Fahrenheit) or more below the flash point of the aforementioned solvent. In one embodiment, the rate of flow of the condensed liquid may be limited to 2,838 l/min (0.75 GPM), and the separator may thus be engineered for the combined flow rate of condensed liquid from the still and drying vapor condensers **26** and **36.**

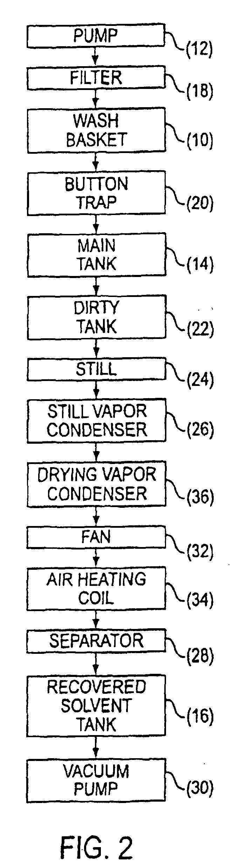

Figure **2** illustrates an order in which the various components of the present invention may be employed for clarification purposes. Having followed the foregoing process of dry cleaning, there is no less than one but as many as two or more sources of solvent to the separator. The ability to return re-condensed solvent to the dry cleaning system is dependent on the separator **28** and its efficiency.

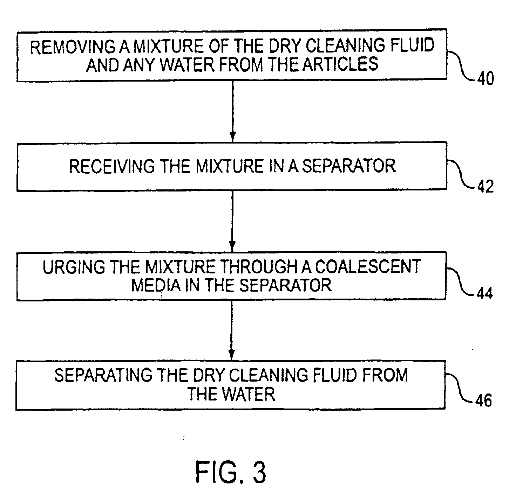

To afford such efficiency, a method of water and solvent separation is provided, as shown in Figure 3. As shown, in operation 40, a mixture of the dry cleaning fluid and any water from the articles is removed during the dry cleaning process. The mixture is then received by the separator 28 in operation 42. Upon receipt, the mixture is urged through a coalescent media, as indicated in operation 44. Next, the dry cleaning fluid is separated from the water. Note operation 46.

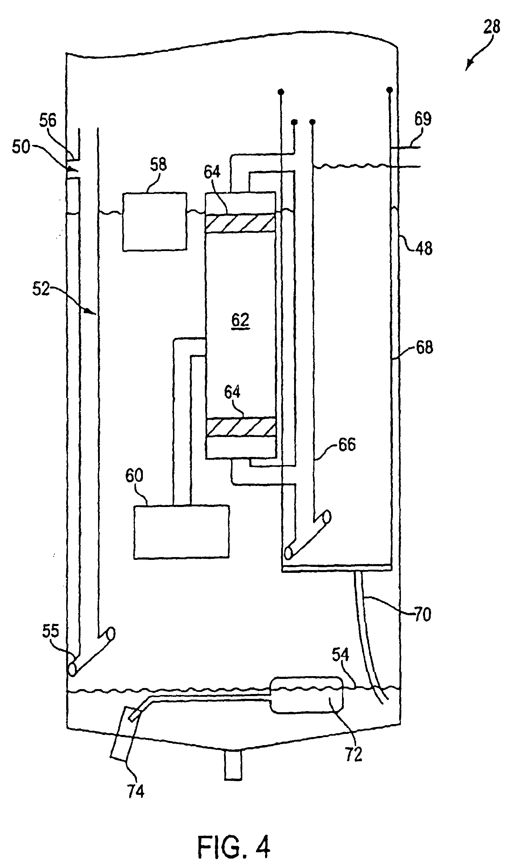

Figure **4** is a schematic of the separator **28** of one embodiment of the present invention which is capable of performing the method of Figure **3.** As the flow of the hydrated solvent, or mixture of water and dry cleaning fluid, approaches a main chamber **48** of the separator **28,** the mixture may be filtered to prevent lint and particulate soil from entering the separator **28** which may in turn restrict a coalescent filter that is downstream. To accomplish such filtering, coalescent media **56** may be draped at the initial termination of an inlet tube **52**. The various coalescent media of the present invention may include nylon or any other coalescing media. The plumbing connection from the vapor condensers **26** and **36** of the dry cleaning system **5** of Figure **1** may be plumbed such that there are no low points where water can collect. This way, the flow of the mixture may be afforded as direct an entry as possible to the separator **28.**

The hydrated solvent enters the separator **28** at **50** where gravity feeds it down the inlet tube **52** which terminates several cm (inches) above an interface level **54** between the water and the dry cleaning fluid. The silicone-based solvent is insoluble in water yet water, in micelle form, suspends itself in the hydrated solvent until they form globules of about .015 cm in diameter. Due to the combined weight, the globules settle to the bottom of the main chamber **48.** The hydrated solvent flows horizontally out horizontal ends **55** of the inlet tube **52** to minimize turbulence.

As the overall liquid in the main chamber **48** rises, a float level switch **58** is tripped which in turn activates a submersible pump **60** that is rated up to 1513,8 l/h (400 GPH). Such pump **60** draws the hydrated solvent from a level of between 1/3 and 1/2 the overall height of the main chamber **48.** The liquid is then pumped by the pump **60** into a filter housing **62** which has a vertical cavity of between 5,08 cm and 50,8 cm (2 and 20 inches).

The hydrated solvent is then forced or pulled through coalescent media **64** positioned within the filter housing **62.** This media is between 5,08 cm and 30,48 cm (2 and 12 inches) in diameter with a cross-section between 0,635 cm and 10,16 cm (1/4 and 4 inches). It should be noted that there can be as many as three or more separate medium **64** positioned on the vertical cavity of the filter housing **62.** The open cell configuration of a PFP polymer that may be used to construct the coalescent media **64** allows for the coalescing of the water micelles. Some of the water globules are created as the hydrated solvent is forced through the coalescent media **64** and appear on the outgoing side of the coalescent media **64.**

The pump **60** may be electrical or pneumatic in form. The use of any flow controller such as the pump **60** or, in the alternative, a vacuum results in sufficient separation. The flow controller chosen should effect a flow of 1,892 to 9,461 l/min (0.5 to 2.5 GPM). If the inflow of hydrated solvent is greater than the coalescent media **64** will allow, the re-positioning of the float level switch **58** which activates the flow controller can be lowered to allow for a larger buffer for the hydrated solvent.

As the separated liquid leaves the filter housing **62,** it enters a vertical tube **66** in another chamber **68** which allows the water globules to settle to a bottom thereof. The separated solvent flows out the solvent outlet **69.**

The collected water globules at the base of the chamber 68 flow via gravity through the water gravity via a tube **70** to the bottom of the main chamber **48.** In one embodiment, the line **70** has an inner diameter of between 0,318 cm and 0,635 cm (1/8 and 1/4 inches). The water that is collected at the bottom of the main chamber **48** is evacuated by a water float level switch **72** which mechanically opens a hinged valve **74.** There is also an option of using two conductivity points, or probes (not shown), that make contact as the water rises in order to complete a circuit to signal either a pneumatic or electric valve which may discharge the water that is in the main chamber **48.** There may also be a manual drain at the bottom of the main chamber **48** for manual periodic maintenance.

The composition of the main chamber 48 can be stainless steel, or polyethylene. Constructing the main chamber **48** of carbon steel is discouraged since oxidation and rusting can quickly occur. Also, the use of tygon tubing, polyvinyl chloride, and vinyl chloride should be discouraged in that the silicone-based solvent will remove the platicizer leaving the material brittle. Other products that are unaffected by the solvent may also be used.

The use of silicone-based solvent allows for latitudes in temperatures that have not traditionally existed in the dry cleaning field. The importance of controlling the temperature of the liquid solvents that are used in the field of dry cleaning is critical.

The most prevalent solvent used as previously stated is PERC whose temperature is ideally maintained at a range of 25,6 °C to 27,78 °C (78 to 82 degrees Fahrenheit). This is also a common range for all other solvents currently being used in the field of dry cleaning. If the temperature should increase, the result is a much more aggressive solvent resulting in damage to textiles being processed. The increase in the KB (kari butyl) value most often results in causing dyes to be stripped from articles being cleaned, resulting in the transfer of these dyes to other articles being cleaned. The concern for controlling temperature has caused manufactures of dry cleaning machines to install water cooling coils placed in the base tanks, and in-line water cooling jackets on the plumbing lines for heat transfer.

By increasing the temperature of the silicone-based solvent of the present invention to a range of 32,2 °C to 54,4 °C (90 to 130 degrees Fahrenheit) an aggressiveness in cleaning is afforded, without the result of pulling or stripping dyes. This is best accomplished by circulating water in a closed loop fashion between a hot water tank and through a circulating pump and through the coils (previously used for cooling) and back to the hot water tank. The circulating pump is controlled by a temperature probe that can be placed in the solvent. The result is precisely controlled solvent temperature which influences the aggressiveness of the solvent without causing damage to the articles being cleaned.

While various embodiments have been described above, it should be understood that they have been presented by way of example only, and not limitation. Thus, the breadth and scope of a preferred embodiment should not be limited by any of the above described exemplary embodiments, but should be defined only in accordance with the following claims and their equivalents.

## Claims

1. A system for dry cleaning articles comprising:
a cleaning basket (10) for receiving the articles;
a tank (14, 16) containing a solvent;
a pump (12) coupled between the tank (14, 16) and the cleaning basket (10) for introducing solvent into the cleaning basket;
either a still for distilling the solvent or a Kleen Rite® cartridge,
a fan (32) coupled to the cleaning basket (10) for circulating air past a heater (34) and into the cleaning basket (10) for drying the articles;
a condenser (36) coupled to the cleaning basket (10) and producing a condensed mixture of water and solvent; and
a separator (28) coupled to the condenser (36) for separating water in the condensed mixture from solvent in the condensed mixture, the separator comprising:
a chamber (48; 68) containing a top layer comprising solvent and a bottom layer comprising water seperated via gravity, wherein an interface (54) is defined between said top layer and said bottom layer,
an inlet (50) for introducing the condensed mixture received from the condensor (36, 26) to the chamber,
an outlet (60; 69) coupled to the chamber (48; 68) through which at least a portion the top layer can be removed from the chamber,
**characterised in that**
the solvent is a siloxane solvent; and
the separator (28) separates water in the condensed mixture from siloxane solvent in the condensed mixture via gravity, the separator further comprising:
an inlet tube (52) having a top end and a bottom end (55),
said top end being coupled to said inlet (50),
said inlet tube (52) having a length such that said bottom end (55) introduces said mixture to said chamber (48) at a location proximate said interface (54),
said bottom end (55) being formed such that said bottom end (55) introduces said mixture to said chamber (48) along a horizontal path for minimizing turbulence.

2. The system according to claim 1, wherein the still (24) is coupled to the cleaning basket for distilling siloxane solvent that exits the cleaning basket.

3. The system according to claim 1, wherein the still (24) is coupled to a second condenser (26) for condensing water vapor and siloxane vapor exiting the still (24) to produce a condensed mixture of water and siloxane solvent, the second condenser (26) also being coupled to the separator (28).

4. The system according to claim 2 or 3, further comprising a vacuum generator coupled to the still for creating a vacuum therein.

5. The system according to any of claims 1 to 4, wherein vapor laden air that has exited the cleaning basket (10) is at a temperature ranging from 48,9°C to 58,9°C.

6. The system according to any of claims 1 to 5, wherein the circulating air entering the cleaning basket (10) is at a temperature ranging from 48,9°C to 82,2°C.

7. The system according to any of claims 1 to 6, further comprising a filter (18) coupled to the cleaning basket (10) through which siloxane solvent entering the cleaning basket (10) passes.

8. The system according to claim 7, wherein the filter (18) is the Kleen Rite cartridge filter, and wherein the system does not comprise a still.

9. The system according to any of claims 1 to 8, further comprising a coalescent medium (56) coupled to the separator (28) such that the condensed mixture passes through the coalescent medium (56) before entering the separator (28).

10. The system according to any preceeding claim, werein the separator (28) further comprises a second outlet (74; 70) coupled to the chamber (48; 68) through which the bottom layer can be removed from the chamber.

11. The system according to any preceeding claim, the separator (28) further comprising a second chamber (68) for further separating siloxane solvent and water via gravity, wherein the top layer of said chamber (48) comprises hydrated siloxane comprising water, and wherein the hydrated siloxane of said top layer of said chamber (48) is introduced to a location in said second chamber (68).

12. The system according to claim 11, wherein said hydrated siloxane is introduced to the second chamber (68) along a horizontal path for minimizing turbulence.

13. The system according to claim 11 or 12, the separator (28) further comprising a second coalescent medium (64) and wherein the hydrated siloxane is subjected to such second coalescent medium (64) prior to being introduced to said second chamber (68).

14. The system according to any preceeding claim, the separator (28) further comprising a flow controller (60) for controlling the flow of the mixture introduced into said chamber (48).

15. The system according to claims 11 and 14, wherein the flow controller (60) is a pump pumping said hydrated siloxane to said second chamber (68).

16. The system according to claim 11, the separator (28) further comprising a third outlet (69) coupled to the second chamber (68) such that water cannot be removed through the third outlet.

17. The system according to claim 16, the separator (28) further comprising a fourth outlet (70) coupled to the second chamber (68), wherein water is removed through the fourth outlet, and wherein flow from the fourth outlet (70) is received in the bottom layer of said chamber (48).

18. The system according to claim 9 or 13 wherein the coalescent medium (56; 64) comprises a coalescent medium selected from the group consisting of an open cell configuration PFP polymer, an open cellular foam as prepared by urea-formaldehyde resin and nylon.

19. A method for dry cleaning an article comprising:
loading the article into a cleaning basket (10);
immersing the article in a siloxane solvent in the cleaning basket (10);
agitating the article in the siloxane solvent;
removing at least a portion of the siloxane solvent from the cleaning basket (10) by centrifuging the article;
either destilling the silixane solvent to recover the siloxane solvent or passing the siloxane solvent through a Kleen Rite® cartridge;
drying the article by circulating heated air about the article,
removing a vapor mixture containing siloxane vapor and water vapor from the cleaning basket (10);
condensing the vapor mixture to produce a condensed mixture;
separating water in the condensed mixture from siloxane solvent in the condensed mixture via gravity,
removing the article from the cleaning basket; and
reusing the siloxane solvent,
wherein the separating step comprises:
introducing the condensed mixture in a separator (28) comprising a chamber (48; 68) containing a top layer comprising siloxane solvent and a bottom layer comprising water, wherein the mixture is introduced within the chamber at a location proximate an interface (54) between the top layer and the bottom layer and along a horizontal path for minimizing turbulence of the condensed mixture during introducing into the chamber;
gravitating water from the mixture to the bottom layer, whereby the top layer comprises siloxane solvent separated from the mixture; and
removing the siloxane solvent separated from the mixture in the chamber (48);

20. The method according to claim 19, further comprising condensing siloxane vapor generated during distilling and separating water in such condensed mixture from siloxane solvent in the condensed mixture also via gravity.

21. The method according to claim 19, wherein the temperature of the condensed vapor laden air from the cleaning basket (10) is at a temperature ranging from 48,9°C to 58,9°C.

22. The method according to claim 19, wherein the circulating air is maintained at a temperature ranging from 48,9°C to 82,2°C.

23. The method according to claim 19, further comprising the step of maintaining a temperature of the siloxane solvent during agitating the article between 32,2 °C and 54,4 °C.

24. The method according to claim 19, further comprising the step of using a vacuum generator to extract the siloxane solvent from a still used for destilling the silixane solvent.

25. The method according to claim 19, further comprising the step of filtering the siloxane solvent prior to immersing the article.

26. The method according to claim 19, further comprising the step of filtering the siloxane prior to the separating step.

27. The method according to claim 19, further comprising passing the condensed vapor mixture through a coalescent medium (56, 64).

28. The method according to any of claims 19 to 27, further comprising coalescing said water in said mixture prior to introducing said mixture to said chamber.

29. The method according to any of claims 19 to 28, wherein said siloxane solvent in said top layer is hydrated comprising water, the method further comprising introducing said hydrated siloxane from said top layer in a second chamber (68) for further separating siloxane solvent and water via gravity.

30. The method according to claim 29, wherein introducing said hydrated siloxane to said second chamber (68) comprises introducing said hydrated siloxane along a horizontal path to said second chamber (68) for minimizing turbulence.

31. The method according to claim 29 or 30, further comprising coalescing the water in the hydrated siloxane prior to introducing said hydrated siloxane to said second chamber.

32. The method according to any of claims 29 to 32, wherein introducing said hydrated siloxane comprises introducing said hydrated siloxane to said second chamber (68) when a height level of said top layer in said first chamber (48) is above a predetermined level.

## Patentansprüche

1. System zur Trockenreinigung von Artikeln, das Folgendes umfasst:
eine Reinigungstrommel (10) zur Aufnahme der Artikel;
einen Behälter (14, 16) mit einem Lösungsmittel;
eine zwischen dem Behälter (14, 16) und der Reinigungstrommel (10) gekoppelte Pumpe (12) zur Einleitung von Lösungsmittel in die Reinigungstrommel;
entweder einen Destillationsapparat zum Destillieren des Lösungsmittels oder eine Kleen Rite®-Patrone,
ein mit der Reinigungstrommel (10) verbundenes Gebläse (32) zur Zirkulation von Luft an einer Heizvorrichtung (34) vorbei und in die Reinigungstrommel (10) zum Trocknen der Artikel;
einen mit der Reinigungstrommel (10) verbundenen Kondensator (36), der ein kondensiertes Gemisch aus Wasser und Lösungsmittel erzeugt; und
einen mit dem Kondensator (36) verbundenen Separator (28) zum Trennen von Wasser in dem kondensierten Gemisch von dem Lösungsmittel in dem kondensierten Gemisch, wobei der Separator folgendes umfasst:
eine Kammer (48; 68) mit einer Lösungsmittel enthaltenden oberen Lage und einer durch Schwerkraft getrenntes Wasser enthaltenden unteren Lage, wobei zwischen der oberen Lage
und der unteren Lage eine Grenzfläche (54) definiert wird,
einen Einlass (50) zum Einleiten des von dem Kondensator (36, 26) empfangenen kondensierten Gemisches in die Kammer,
einen mit der Kammer (48; 68) verbundenen Auslass (60; 69), durch den mindestens ein Teil der oberen Lage aus der Kammer entfernt werden kann,
**dadurch gekennzeichnet, dass**
es sich bei dem Lösungsmittel um ein Siloxanlösungsmittel handelt; und
der Separator (28) Wasser in dem kondensierten Gemisch durch Schwerkraft von dem Siloxanlösungsmittel in dem kondensierten Gemisch trennt, wobei der Separator weiterhin:
ein Einlassrohr (52) mit einem oberen Ende und einem unteren Ende (55) umfasst,
wobei das obere Ende mit dem Einlass (50) verbunden ist,
wobei das Einlassrohr (52) so lang ist, dass das untere Ende (55) das Gemisch an einer Stelle nahe der Grenzfläche (54) in die Kammer (48) einleitet,
wobei das untere Ende (55) so ausgebildet ist, dass es das Gemisch entlang einem horizontalen Weg in die Kammer (48) einleitet, um Turbulenzen auf ein Minimum zu reduzieren.

2. System nach Anspruch 1, bei dem der Destillationsapparat (24) mit der Reinigungstrommel zum Destillieren von in der Reinigungstrommel existierendem Siloxanlösungsmittel verbunden ist.

3. System nach Anspruch 1, bei dem der Destillationsapparat (24) mit einem zweiten Kondensator (26) zum Kondensieren von den Destillationsapparat (24) verlassendem Wasserdampf und Siloxandampf zwecks Erzeugung eines kondensierten Gemisches aus Wasser und Siloxanlösungsmittel verbunden ist, wobei der zweite Kondensator (26) auch mit dem Separator (28) verbunden ist.

4. System nach Anspruch 2 oder 3, weiterhin mit einem Vakuumerzeuger, der mit dem Destillationsapparat verbunden ist, um darin ein Vakuum zu erzeugen.

5. System nach einem der Ansprüche 1 bis 4, bei dem dampfhaltige Luft, die die Reinigungstrommel (10) verlassen hat, eine Temperatur zwischen 48,9°C und 58,9°C aufweist.

6. System nach einem der Ansprüche 1 bis 5, bei dem die in die Reinigungstrommel (10) eintretende zirkulierende Luft eine Temperatur zwischen 48,9°C und 82,2°C aufweist.

7. System nach einem der Ansprüche 1 bis 6, weiterhin mit einem mit der Reinigungstrommel (10) verbundenen Filter (18), durch den in die Reinigungstrommel (10) eintretendes Siloxan strömt.

8. System nach Anspruch 7, bei dem es sich bei dem Filter (18) um den Kleen Rite-Patronenfilter handelt, wobei das System keinen Destillationsapparat umfasst.

9. System nach einem der Ansprüche 1 bis 8, weiterhin mit einem Koalesziermedium (56), das mit dem Separator (28) verbunden ist, so dass das kondensierte Gemisch durch das Koalesziermedium (56) strömt, bevor es in den Separator (28) eintritt.

10. System nach einem der vorhergehenden Ansprüche, bei dem der Separator (28) weiterhin einen mit der Kammer (48; 68) verbundenen zweiten Auslass (74; 70) umfasst, durch den die untere Lage aus der Kammer entfernt werden kann.

11. System nach einem der vorhergehenden Ansprüche, wobei der Separator (28) weiterhin eine zweite Kammer (68) zum weiteren Trennen von Siloxanlösungsmittel und Wasser über Schwerkraft umfasst, wobei das hydratisierte Siloxan der oberen Lage der Kammer (48) zu einer Stelle in der zweiten Kammer (68) eingeleitet wird.

12. System nach Anspruch 11, bei dem das hydratisierte Siloxan entlang einem horizontalen Weg zur Minimierung von Turbulenzen in die zweite Kammer (68) eingeleitet wird.

13. System nach Anspruch 11 oder 12, wobei der Separator (28) weiterhin ein zweites Koalesziermedium (64) umfasst und bei dem das hydratisierte Siloxan vor Einleitung in die zweite Kammer (68) solch einem zweiten Koalesziermedium (64) ausgesetzt wird.

14. System nach einem der vorhergehenden Ansprüche, wobei der Separator (28) weiterhin eine Strömungssteuerung (60) zum Steuern der Strömung des in die Kammer (48) eingeleiteten Gemisches umfasst.

15. System nach Anspruch 11 und 14, bei dem es sich bei der Strömungssteuerung (60) um eine Pumpe handelt, die das hydratisierte Siloxan zur zweiten Kammer (68) pumpt.

16. System nach Anspruch 11, wobei der Separator (28) einen dritten Auslass (69) umfasst, der mit der zweiten Kammer (68) verbunden ist, so dass das Wasser nicht durch den dritten Auslass entfernt werden kann.

17. System nach Anspruch 16, wobei der Separator (28) weiterhin einen vierten Auslass (70) umfasst, der mit der zweiten Kammer (68) verbunden ist, wobei Wasser durch den vierten Auslass entfernt wird, und bei dem Strömung aus dem vierten Auslass (70) in der unteren Lage der Kammer (48) empfangen wird.

18. System nach Anspruch 9 oder 13, bei dem das Koalesziermedium (56; 64) ein Koalesziermedium umfasst, das aus der Gruppe, bestehend aus einem PFP-Polymer mit offenzelliger Konfiguration, einem offenzelligen Schaumstoff, wie er aus Harnstoff-Formaldehyd-Harz hergestellt ist, und Polyamid, ausgewählt ist.

19. Verfahren zur Trockenreinigung eines Artikels, das Folgendes umfasst:
Laden des Artikels in eine Reinigungstrommel (10);
Eintauchen des Artikels in ein Siloxanlösungsmittel in der Reinigungstrommel (10) ;
Hin- und Herbewegen des Artikels in dem Siloxanlösungsmittel;
Entfernen mindestens eines Teils des Siloxanlösungsmittels aus der Reinigungstrommel (10) durch Zentrifugieren des Artikels;
entweder Destillieren des Siloxanlösungsmittels zur Rückgewinnung des Siloxanlösungsmittels oder Leiten des Siloxanlösungsmittels durch eine Kleen Rite®-Patrone;
Trocknen des Artikels durch Zirkulieren erwärmter Luft um den Artikel herum,
Entfernen eines Siloxandampf und Wasserdampf enthaltenden Dampfgemisches aus der Reinigungstrommel (10);
Kondensieren des Dampfgemisches zur Erzeugung eines kondensierten Gemisches;
Trennen von Wasser in dem kondensierten Gemisch von Siloxanlösungsmittel in dem kondensierten Gemisch über Schwerkraft;
Entfernen des Artikels aus der Reinigungstrommel; und
Wiederverwenden des Siloxanlösungsmittels,
wobei der Trennschritt:
das Einleiten des kondensierten Gemisches in einen Separator (28) umfasst, der eine Kammer (48; 68) aufweist, die eine Siloxanlösungsmittel enthaltende obere Lage und eine Wasser enthaltende untere Lage enthält, wobei das Gemisch an einer Stelle nahe einer Grenzfläche (54) zwischen der oberen Lage und der unteren Lage und entlang einem horizontalen Weg zur Minimierung von Turbulenzen des kondensierten Gemisches während der Einleitung in die Kammer in Letztere eingeleitet wird,
Gravitieren von Wasser aus dem Gemisch zur unteren Lage, wodurch die obere Lage von dem Gemisch getrenntes Siloxanlösungsmittel umfasst; und
Entfernen des von dem Gemisch in der Kammer (48) getrennten Siloxanlösungsmittels.

20. Verfahren nach Anspruch 19, das weiterhin Kondensieren von während des Destillierens erzeugtem Siloxandampf und Trennen von Wasser in solch einem kondensierten Gemisch von dem Siloxanlösungsmittel in dem kondensierten Gemisch auch über Schwerkraft umfasst.

21. Verfahren nach Anspruch 19, bei dem die Temperatur der kondensierten dampfhaltigen Luft aus der Reinigungstrommel (10) in einem Bereich von 48,9°C bis 58,9°C liegt.

22. Verfahren nach Anspruch 19, bei dem die zirkulierende Luft auf einer Temperatur in einem Bereich von 48,9°C bis 82,2°C gehalten wird.

23. Verfahren nach Anspruch 19, weiterhin mit dem Schritt des Aufrechterhaltens einer Temperatur des Siloxanlösungsmittels während des Hin- und Herbewegens des Artikels zwischen 32,2°C und 54,4°C

24. Verfahren nach Anspruch 19, weiterhin mit dem Schritt des Verwendens eines Vakuumerzeugers zum Extrahieren von Siloxanlösungsmittel aus einem zum Destillieren des Siloxanlösungsmittels verwendeten Destillationsapparat.

25. Verfahren nach Anspruch 19, weiterhin mit dem Schritt des Filterns des Siloxanlösungsmittels vor dem Eintauchen des Artikels.

26. Verfahren nach Anspruch 19, weiterhin mit dem Schritt des Filterns des Siloxans vor dem Trennschritt.

27. Verfahren nach Anspruch 19, das weiterhin das Hindurchleiten des kondensierten Dampfgemisches durch ein Koalesziermedium (56, 64) umfasst.

28. Verfahren nach einem der Ansprüche 19 bis 27, das weiterhin das Koaleszieren des Wassers in dem Gemisch vor dem Einleiten des Gemisches in die Kammer umfasst.

29. Verfahren nach einem der Ansprüche 19 bis 28, bei dem das Siloxanlösungsmittel in der oberen Lage mit Wasser hydratisiert wird, wobei das Verfahren weiterhin das Einleiten des hydratisierten Siloxans aus der oberen Lage in eine zweite Kammer (68) zum weiteren Trennen von Siloxanlösungsmittel und Wasser über Schwerkraft umfasst.

30. Verfahren nach Anspruch 29, bei dem das Einleiten des hydratisierten Siloxans in die zweite Kammer (68) das Einleiten des hydratisierten Siloxans entlang einem horizontalen Weg in die zweite Kammer (68) zur Minimierung von Turbulenzen umfasst.

31. Verfahren nach Anspruch 29 oder 30, das weiterhin Koaleszieren des Wassers in dem hydratisierten Siloxan vor Einleiten des hydratisierten Siloxans in die zweite Kammer umfasst.

32. Verfahren nach einem der Ansprüche 29 bis 32, bei dem das Einleiten des hydratisierten Siloxans das Einleiten des hydratisierten Siloxans in die zweite Kammer (68), wenn ein Pegel der oberen Lage in der ersten Kammer (48) über einer vorbestimmten Höhe liegt, umfasst.

## Revendications

1. Système de nettoyage à sec d'articles comprenant :
un panier de nettoyage (10) destiné à recevoir les articles ;
un réservoir (14, 16) contenant un solvant ;
une pompe (12) couplée entre le réservoir (14, 16) et le panier de nettoyage (10) destinée à l'introduction du solvant dans le panier de nettoyage ;
soit un tube de distillation du solvant, soit une cartouche Klean Rite ®,
un ventilateur (32) couplé au panier de nettoyage (10) destiné à faire circuler l'air après un chauffage (34) dans le panier de nettoyage (10) afin de sécher les articles ;
un condenseur (36) couplé au panier de nettoyage (10) et produisant un mélange condensé d'eau et de solvant ; et
un séparateur (28) couplé au condenseur (36) destiné à séparer l'eau du solvant contenus dans le mélange condensé, le séparateur comprenant :
une chambre (48 ;68) contenant une couche supérieure comprenant du solvant et une couche inférieure comprenant de l'eau séparée par gravité, dans laquelle une interface (54) est définie entre ladite couche supérieure et ladite couche inférieure,
une entrée (50) destinée à l'introduction du mélange condensé reçu du condenseur (36 ; 26) dans la chambre,
une sortie (60 ; 69) couplée à la chambre (48 ; 68) par laquelle au moins une partie de la couche supérieure peut être évacuée de la chambre,
**caractérisé en ce que**
le solvant est un solvant de siloxane ; et
le séparateur (28) sépare de l'eau du solvant de siloxane dans le mélange condensé par l'intermédiaire de la gravité, le séparateur comprenant en outre :
un tube d'entrée (52) ayant une extrémité supérieure et une extrémité inférieurs (55),
ladite extrémité supérieure étant couplée à ladite entrée (50),
ledit tube d'entrée (52) ayant une longueur telle que ladite extrémité inférieure (55) introduise ledit mélange dans ladite chambre (48) à un endroit à proximité de ladite interface (54),
ladite extrémité inférieure (55) étant formée de manière à ce que ladite extrémité inférieure (55) introduise ledit mélange dans ladite chambre (48) le long d'un trajet horizontal afin de minimiser les turbulences.

2. Système selon la revendication 1, dans lequel le tube de distillation (24) est couplé au panier de nettoyage afin de distiller le solvant de siloxane sortant du panier de nettoyage.

3. Système selon la revendication 1, dans lequel le tube de distillation (24) est couplé à un second condenseur (26) afin de condenser la vapeur d'eau et la vapeur de siloxane s'échappant du tube (24) pour produire un mélange condensé d'eau et de solvant de siloxane, le second condenseur (26) étant également couplé au séparateur (28).

4. Système selon la revendication 2 ou 3, comprenant en outre un générateur de vide couplé au tube de distillation afin de créer un vide à l'intérieur.

5. Système selon l'une quelconque des revendications 1 à 4, dans lequel l'air chargé en vapeur ayant quitté le panier de nettoyage (10) est à une température comprise entre 48,9 et 58,9°C.

6. Système selon l'une quelconque des revendications 1 à 5, dans lequel l'air en circulation entrant dans le panier de nettoyage (10) est à une température comprise entre 48,9 et 82,2°C.

7. Système selon l'une quelconque des revendications 1 à 6, comprenant en outre un filtre (18) couplé au panier de nettoyage (10) traversé par le solvant de siloxane entrant dans le panier de nettoyage (10).

8. Système selon la revendication 7, dans lequel le filtre (18) est une cartouche filtrante Klean Rite et dans lequel le système ne comprend pas de tube de distillation.

9. Système selon l'une quelconque des revendications 1 à 8, comprenant en outre un moyen coalescent (56) couplé au séparateur (28) de manière à ce que le mélange condensé traverse le moyen coalescent (56) avant d'entrer dans le séparateur (28).

10. Système selon l'une quelconque des revendications précédentes, dans lequel le séparateur (28) comprend une seconde sortie (74 ; 70) couplée à la chambre (48 ; 68) par laquelle la couche inférieure peut être évacuée de la chambre.

11. Système selon l'une quelconque des revendications précédentes, le séparateur (28) comprenant en outre une seconde chambre (68) destinée à séparer en outre le solvant de siloxane et l'eau par l'intermédiaire de la gravité, dans lequel la couche supérieure de ladite chambre (48) comprend du siloxane hydraté comportant de l'eau et dans lequel le siloxane hydraté de ladite couche supérieure de ladite chambre (48) est introduit à un endroit dans ladite seconde chambre (68).

12. Système selon la revendication 11, dans lequel ledit siloxane hydraté est introduit dans la seconde chambre (68) le long d'un trajet horizontal afin de minimiser les turbulences.

13. Système selon la revendication 11 ou 12, le séparateur (28) comprenant en outre un second moyen coalescent (64) et dans lequel le siloxane hydraté est soumis à un tel moyen coalescent (64) avant d'être introduit dans ladite seconde chambre (68).

14. Système selon l'une quelconque des revendications précédentes, le séparateur (28) comprenant en outre un contrôleur de flux (60) destiné à contrôler le flux de mélange introduit dans ladite chambre (48).

15. Système selon les revendications 11 et 14, dans lequel le contrôleur de flux (60) est une pompe pompant ledit siloxane hydraté vers ladite seconde chambre (68).

16. Système selon la revendication 11, le séparateur (28) comprenant en outre une troisième sortie (69) couplée à la seconde chambre (68) de manière à ce que l'eau ne puisse pas être évacuée par la troisième sortie.

17. Système selon la revendication 16, le séparateur (28) comprenant en outre une quatrième sortie (70) couplée à la seconde chambre (68) dans lequel l'eau est évacuée par la quatrième sortie et dans lequel le flux provenant de la quatrième sortie (70) est reçu dans la couche inférieure de ladite chambre (48).

18. Système selon la revendication 9 ou 13, dans lequel le moyen coalescent (56 ;64) comprend un moyen coalescent sélectionné dans le groupe comportant un polymère PFP à configuration en cellule ouverte, une mousse à cellule ouverte telle que préparée pour la résine uréique ou le nylon.

19. Procédé de nettoyage à sec d'un article comprenant :
le chargement de l'article dans un panier de nettoyage (10) ;
l'immersion de l'article dans un solvant de siloxane dans le panier de nettoyage (10) ; l'agitation de l'article dans le solvant de siloxane ;
l'élimination d'au moins une partie du solvant de siloxane du panier de nettoyage (10) par centrifugation de l'article ;
soit la distillation du solvant de siloxane pour récupérer le solvant de siloxane, soit le passage dans une cartouche filtrante Klean Rite ® du solvant de siloxane ;
le séchage de l'article en faisant circuler de l'air chauffé autour de l'article ;
l'élimination d'un mélange de vapeur contenant de la vapeur de siloxane et de la vapeur d'eau du panier de nettoyage (10) ;
la condensation du mélange de vapeur pour produire un mélange condensé ;
la séparation de l'eau du solvant de siloxane dans le mélange condensé par l'intermédiaire de la gravité ;
la sortie de l'article du panier de nettoyage ; et
la réutilisation du solvant de siloxane,
dans lequel l'étape de séparation comprend :
l'introduction du mélange condensé dans un séparateur (28) comprenant une chambre (48 ; 68) contenant une couche supérieure comportant du solvant de siloxane et une couche inférieure comprenant de l'eau, dans lequel le mélange est introduit dans la chambre à un endroit à proximité de l'interface (54) entre la couche supérieure et la couche inférieure le long d'un trajet horizontal afin de minimiser les turbulences du mélange condensé au cours de l'introduction dans la chambre ;
la séparation par gravité de l'eau du mélange condensé vers la couche inférieure, dans lequel la couche supérieure comprend du solvant de siloxane séparé du mélange ; et
l'évacuation du solvant de siloxane séparé du mélange de la chambre (48).

20. Procédé selon la revendication 19, comprenant en outre la condensation de la vapeur de siloxane générée au cours de la distillation et la séparation de l'eau du solvant de siloxane dans le mélange condensé également par l'intermédiaire de la gravité.

21. Procédé selon la revendication 19, dans lequel la température de l'air chargé en vapeur condensée provenant du panier de nettoyage (10) est à une température comprise entre 48,9 et 58,9°C.

22. Procédé selon la revendication 19, dans lequel l'air en circulation est maintenu à une température comprise entre 48,9 et 82,2°C.

23. Procédé selon la revendication 19, comprenant en outre l'étape de maintien à une température comprise entre 32,2°C et 54,4°C du solvant de siloxane au cours de l'agitation de l'article.

24. Procédé selon la revendication 19, comprenant en outre l'étape d'utilisation d'un générateur de vide pour extraire le solvant de siloxane d'un tube de distillation utilisé afin de distiller le solvant de siloxane.

25. Procédé selon la revendication 19, comprenant en outre l'étape de filtrage du solvant de siloxane avant l'immersion de l'article.

26. Procédé selon la revendication 19, comprenant en outre l'étape de filtrage du siloxane avant l'étape de séparation.

27. Système selon la revendication 19, comprenant en outre le passage du mélange de vapeur condensé dans un moyen coalescent (56 ; 64).

28. Procédé selon l'une quelconque des revendications 19 à 27, comprenant en outre la coalescence de ladite eau dans ledit mélange avant l'introduction dudit mélange dans ladite chambre.

29. Procédé selon l'une quelconque des revendications 19 à 28, dans lequel ledit solvant de siloxane de ladite couche supérieure est de l'eau comprenant du siloxane hydraté, procédé comprenant en outre l'introduction dudit siloxane hydraté provenant de ladite couche supérieure dans une seconde chambre (68) pour une séparation supplémentaire du solvant de siloxane et de l'eau par l'intermédiaire de la gravité.

30. Procédé selon la revendication 29, dans lequel l'introduction dudit siloxane hydraté dans ladite seconde chambre (68) comprend l'introduction dudit siloxane hydraté le long d'un trajet horizontal dans ladite seconde chambre (68) afin de minimiser les turbulences.

31. Procédé selon la revendication 29 ou 30, comprenant en outre la coalescence de l'eau dans le siloxane hydraté avant l'introduction dudit siloxane hydraté dans ladite seconde chambre.

32. Procédé selon l'une des revendications 29 à 32, dans lequel l'introduction dudit siloxane hydraté comprend l'introduction dudit siloxane hydraté dans ladite seconde chambre (68) lorsqu'un niveau élevé de ladite couche supérieure dans ladite première chambre (48) est supérieur à un niveau prédéterminé.
